# EUROPEAN PATENT APPLICATION

(11) **EP 4 764 655 A1**
(43) Date of publication of application: **24.06.2026**
(21) Application number: 24307187.5
(22) Date of filing: 19.12.2024
(51) Int. Cl.: G02B 27/01

(54) **A HEAD MOUNTABLE DEVICE COMPRISING AN OPHTHALMIC LENS AND A LIGHT-GUIDE OPTICAL ELEMENT WITH REDUCED LIGHT LEAKS**

(71) Applicant: Essilor International, 94220 Charenton-Le-Pont (FR)
(72) Inventor: MEYNEN, Mathieu, 94340 JOINVILLE-LE-PONT (FR)
(74) Representative: Ipsilon

(57) **Abstract**

This head mountable device (10) comprises an ophthalmic lens having a front wafer (120) and a back wafer (122), an optical system (14) comprising a projector including a light source, a light-guide optical element (16) arranged between the front and back wafers (120, 122) and illuminated by the optical system (14). The optical system (14) is attached to the light-guide optical element (16). The light-guide optical element (16) is bonded to the ophthalmic lens by means of a first adhesive material. The head mountable device (10) comprises, in addition to an ophthalmic portion intended for vision by a user, a non-ophthalmic portion (18) not intended for vision covering the light-guide optical element (16) and extending between the external edge of the back wafer (122) and the external edge of the light-guide optical element (16), the non-ophthalmic portion (18) comprising a hole (20) adapted to accommodate the projector.

## Description

### FIELD OF THE INVENTION

The present invention relates to a head mountable device comprising an ophthalmic lens and a light-guide optical element with reduced light leaks.

### BACKGROUND OF THE INVENTION

Augmented reality and virtual reality systems are very complex products. Most of the time, they include an active component, such as a light-guide optical element, or an electrochromic cell. The active component has to be encapsulated e.g. in a transparent capsule, in order to be protected and/or in order to ensure that the augmented reality or virtual reality image is displayed at the right position with respect to the wearer's eyes. Encapsulation may also be necessary in order to enable the addition, to the augmented or virtual reality system, of an ophthalmic lens with the wearer's prescription.

An example of a method for encapsulating a light-guide optical element in a transparent capsule is described in document WO 2015/059215 A1.

Encapsulation may be realized by gluing a wafer on the active component.

In case the active component is a light-guide optical element, when glue is provided on the waveguide, light guiding in the waveguide will take place correctly because the glue will be selected to have a lower refractive index than the waveguide.

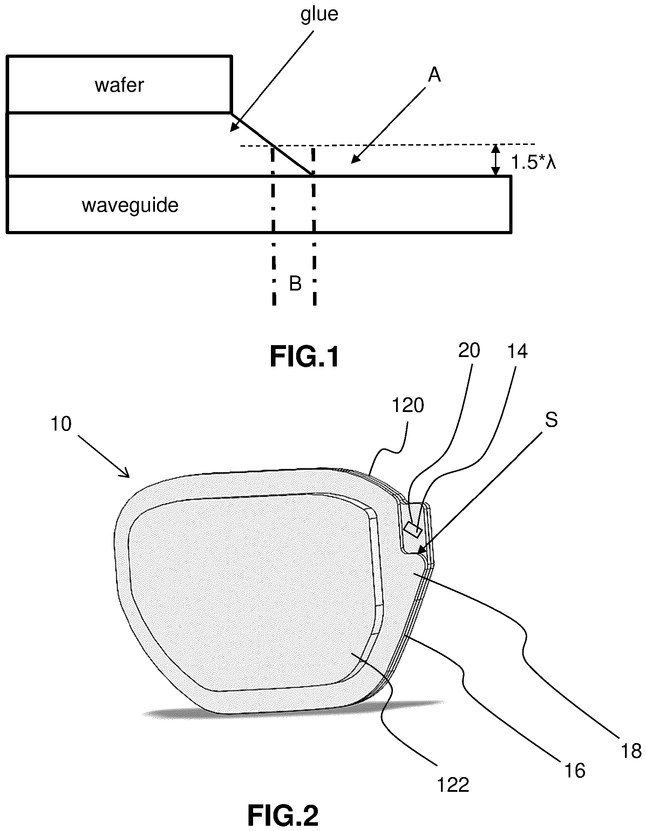

In areas of the waveguide where there is no glue, the air is directly in contact with the waveguide and in these areas, light guiding in the waveguide will also take place correctly because the refractive index of the air is close to 1, which is lower than the refractive index of the waveguide, which is generally higher than 1.5. These areas are referred to as "A" on Figure 1, where the waveguide is assumed to be made of glass.

On the other hand, in the transition area where the thickness of the glue varies from 0 to the expected glue thickness, which amounts to a few microns, the conditions for correct light guiding are not fulfilled, because the glue thickness is close to the wavelength λ or to a few wavelengths (1.5λ in Figure 1) of the light waves that go through the waveguide. This is because for ensuring correct light guiding, the waves at the interface between the light guide and the layer of glue must be evanescent i.e. have an intensity close to 0, which will be obtained only if the layer of glue has a thickness of several wavelengths. This transition area is referred to by "B" in Figure 1.

Thus, when the conditions for correct light guiding are not satisfied in some areas, light reaching these areas may be scattered, generating a loss of contrast in the virtual image, as part of the scattered light would go out of the waveguide and part of the light would be guided and would superimpose on the virtual guided signal.

In order to reduce these light leaks, there is a need to minimize the interaction between the above-mentioned transition area and the waveguide.

### SUMMARY OF THE INVENTION

An object of the present disclosure is to overcome the above-mentioned drawbacks of the prior art.

To that end, the present disclosure provides a head mountable device comprising an ophthalmic lens having a front wafer and a back wafer, an optical system comprising a projector including a light source, a light-guide optical element arranged between the front and back wafers and illuminated by the optical system, the optical system being attached to the light-guide optical element, the light-guide optical element being bonded to the ophthalmic lens by means of a first adhesive material, the head mountable device being remarkable in that it comprises, in addition to an ophthalmic portion intended for vision by a user, a non-ophthalmic portion not intended for vision covering the light-guide optical element and extending between the external edge of the back wafer and the external edge of the light-guide optical element, the non-ophthalmic portion comprising a hole adapted to accommodate the projector.

Thus, the surface covered by the first adhesive material is oversized, so as to not only cover the light-guide optical element, but also the surface between the light-guide optical element and the ophthalmic portion of the ophthalmic lens. Areas A and B shown in Figure 1 are therefore also covered with the first adhesive material. Thus, the dimensions of the above-mentioned transition area are minimized as they are reduced to the area free of glue where the projector is attached to one side of the light-guide optical element. The risk of light leaks is thus greatly reduced.

In an embodiment, the non-ophthalmic portion is bonded to the ophthalmic portion of the head mountable device by means of a second adhesive material.

In an embodiment, the first and second adhesive materials are different from each other.

In an embodiment, the first and second adhesive materials are the same.

To the same end, the present disclosure also provides an augmented reality device, remarkable in that it comprises at least one head mountable device as succinctly described above.

To the same end, the present disclosure also provides a virtual reality device, remarkable in that it comprises at least one head mountable device as succinctly described above.

As the particular characteristics and advantages of the augmented reality device and the virtual reality device are the same as those of the head mountable device, they are not repeated here.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1, already described, shows a technical problem addressed by the present disclosure.
FIG. 2 is a schematic view showing a head mountable device according to the present disclosure, in a particular embodiment.

### DETAILED DESCRIPTION OF EMBODIMENTS

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

Figure 2 shows a particular embodiment of a head mountable device 10 according to the present disclosure.

A head mountable device can be a near eye display device, can be part of an augmented reality device, part of a virtual reality device and/or part of a mixed reality device.

In the particular embodiment shown in Figure 2, the head mountable device 10 comprises an ophthalmic lens having a front wafer 120 and a back wafer 122. However, this is a non-limiting example and as a variant, the ophthalmic lens may have a single wafer.

The head mountable device 10 also comprises an optical system 14. The optical system 14 comprises a projector. The projector includes a light source. By way of non-limiting example, the light source may comprise at least one LED (Light-Emitting Diode).

The head mountable device 10 further comprises a light-guide optical element 16 that is arranged between the front wafer 120 and the back wafer 122 and that is illuminated by the optical system 14. The optical system 14 is attached to the light-guide optical element 16. By way of non-limiting example, the optical system 14 may be glued on the surface of the light-guide optical element 16, so that the projector may be glued on the light-guide optical element 16.

The light-guide optical element 16 is bonded to the ophthalmic lens by means of a first adhesive material and the ophthalmic lens does not cover the whole surface of the light-guide optical element 16.

The first adhesive material may be a glue that has a refractive index lower than the refractive index of the light-guide optical element 16 in order to enable correct light guiding in the light-guide optical element 16. In the particular embodiment shown in Figure 2, the front face of the light-guide optical element 16 is glued to the back face of the front wafer 120 and the back face of the light-guide optical element 16 is glued to the front face of the back wafer 122.

The head mountable device 10 has an ophthalmic portion, defined as that portion of the ophthalmic lens which is intended for vision by a user, i.e. which is used for viewing by the wearer of the head mountable device 10.

The head mountable device 10 has a non-ophthalmic portion 18 in addition to the ophthalmic portion. The non-ophthalmic portion 18 is defined as a portion of the back wafer 122 that covers the light-guide optical element 16 and that is not intended for vision, i.e. that is not used for viewing by the wearer of the head mountable device 10. In other words, the non-ophthalmic portion is an extension of the back wafer 122 that extends between the external edge of the back wafer 122 and the external edge of the light-guide optical element 16. According to the present disclosure, the non-ophthalmic portion 18 comprises a hole 20 adapted to accommodate the projector.

As shown in Figure 2, the non-ophthalmic portion 18 comprises a shoulder S. The shoulder S is advantageously horizontal and is positioned in an area where there are no reflections, in the light-guide optical element 16, of the light emitted by the projector of the optical system 14.

In an embodiment, the non-ophthalmic portion 18 is bonded to the ophthalmic portion of the head mountable device 10. Such bonding may be made by means of a second adhesive material.

The second adhesive material may be a glue. The first and second adhesive materials may be different materials or may be the same material.

In case the first and second adhesive materials are different, the two adhesive materials are first deposited, and the front and back wafers 120, 122 are then brought in contact for bonding.

An augmented reality device according to the present disclosure comprises at least one head mountable device as described above. It may be a display system arranged to display information over the real world view. For example, the display system is arranged to display computer generated information over the real world view. With such an augmented reality device, the viewer's image of the world is augmented with overlaying information.

A virtual reality device according to the present disclosure comprises at least one head mountable device as described above. It may be a display system arranged to display computer generated information instead of the real world view. With such a virtual reality device, the viewer may experience viewing a virtual environment for recreational, training or simulation purposes.

Although representative devices have been described in detail herein, those skilled in the art will recognize that various substitutions and modifications may be made without departing from the scope of what is described and defined by the appended claims.

## Claims

1. A head mountable device (10) comprising an ophthalmic lens having a front wafer (120) and a back wafer (122), an optical system (14) comprising a projector including a light source, a light-guide optical element (16) arranged between said front and back wafers (120, 122) and illuminated by said optical system (14), said optical system (14) being attached to said light-guide optical element (16), said light-guide optical element (16) being bonded to said ophthalmic lens by means of a first adhesive material, said head mountable device (10) being **characterized in that** it comprises, in addition to an ophthalmic portion intended for vision by a user, a non-ophthalmic portion (18) not intended for vision covering said light-guide optical element (16) and extending between the external edge of said back wafer (122) and the external edge of said light-guide optical element (16), said non-ophthalmic portion comprising a hole (20) adapted to accommodate said projector.

2. The head mountable device (10) according to claim 1, **characterized in that** said non-ophthalmic portion (18) is bonded to said ophthalmic portion of said head mountable device (10) by means of a second adhesive material.

3. The head mountable device (10) according to claim 2, **characterized in that** said first and second adhesive materials are different from each other.

4. The head mountable device (10) according to claim 2, **characterized in that** said first and second adhesive materials are the same.

5. The head mountable device (10) according to any of the preceding claims, **characterized in that** said projector is glued on said light-guide optical element (16).

6. An augmented reality device, **characterized in that** it comprises at least one head mountable device (10) according to any of the preceding claims.

7. A virtual reality device, **characterized in that** it comprises at least one head mountable device (10) according to any of claims 1 to 5.
